# EUROPEAN PATENT APPLICATION

(11) **EP 4 535 289 A1**
(43) Date of publication of application: **09.04.2025**
(21) Application number: 24202834.8
(22) Date of filing: 26.09.2024
(51) Int. Cl.: G06T 15/06

(54) **INTERSECTION TESTING IN A RAY TRACING SYSTEM**

(30) Priority: 29.09.2023 GB 202315020
(71) Applicant: Imagination Technologies Limited, Kings Langley, Hertfordshire WD4 8LZ (GB)
(72) Inventor: Smith-Lacey, Peter, Kings Langley, WD4 8LZ (GB); Clark, Gregory, Kings Langley, WD4 8LZ (GB)
(74) Representative: Slingsby Partners LLP

(57) **Abstract**

There is provided a method of performing intersection testing, in a ray tracing system, for a ray with respect to a set of two or more primitives. Each primitive is defined by an ordered set of edges, and each edge is defined by a respective pair of vertices. A set of distinct edges is determined for the set of primitives, each distinct edge being part of at least one primitive of the set of primitives and being defined by a different pair of vertices to the other distinct edges in the set, wherein every edge in the ordered sets of edges that define the set of primitives is represented by a distinct edge of the set of distinct edges. For each distinct edge in the set of distinct edges, an edge test is performed to determine which side of the distinct edge the ray passes on. For each primitive in the set of primitives, a result of the edge test is used for each distinct edge that defines that primitive to determine whether or not the ray intersects that primitive.

## Description

### CROSS-REFERENCE TO RELATED APPLICATON

This application claims priority from UK patent application GB2315020.4 filed on 29 September 2023, which is herein incorporated by reference in their entirety.

### TECHNICAL FIELD

The present disclosure is directed to a method of performing intersection testing in a ray tracing system for a ray with respect to a set of two or more primitives, and to an intersection testing module for use in a ray tracing system that is configured to perform intersection testing for a ray with respect to a set of two or more primitives.

### BACKGROUND

Ray tracing is a computational rendering technique that is used to generate an image of a scene by tracing paths of light from a predefined viewpoint through the scene. The paths of light that are traced through the scene are referred to as rays. Each ray to be traced is modelled as originating from a viewpoint of the scene and passes through a pixel into the scene. As a ray traverses the scene it may intersect objects within the scene. The interaction between a ray and an object that it intersects can be modelled to create realistic visual effects. For example, in response to determining an intersection of a ray with an object, a shader program may be executed in respect of the intersection. The shader program is a portion of computer code. A programmer can write the shader program to define how the system reacts to the intersection which may, for example cause one or more secondary rays to be emitted into the scene. Alternatively, the shader program could cause one or more rays to be emitted into the scene for the purposes of determining whether the object is in shadow at the intersection point.

Conventional ray tracing operations are highly computationally intensive. The intensive nature of these operations means that there is a desire to decrease the latency associated with these operations. Further improvements that are sought for ray tracing technologies include the reduction of hardware area required to perform the processing operations and an overall increase in computing efficiency.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

There is provided a method of performing intersection testing, in a ray tracing system, for a ray with respect to a set of two or more primitives, each primitive being defined by an ordered set of edges, each edge being defined by a respective pair of vertices, the method comprising:
determining a set of distinct edges for the set of primitives, each distinct edge being part of at least one primitive of the set of primitives and being defined by a different pair of vertices to the other distinct edges in the set, wherein every edge in the ordered sets of edges that define the set of primitives is represented by a distinct edge of the set of distinct edges;
for each distinct edge in the set of distinct edges, performing an edge test to determine which side of the distinct edge the ray passes on; and
for each primitive in the set of primitives, using a result of the edge test for each distinct edge that defines that primitive to determine whether or not the ray intersects that primitive.

The ray may be determined to intersect a primitive if the results of the edge tests for each distinct edge that defines the primitive indicate that the ray passes on the inside of each of the edges of the primitive.

Said for each primitive in the set of primitives, using a result of the edge test for each distinct edge that defines that primitive to determine whether or not the ray intersects that primitive may be performed once an edge test has been performed for each distinct edge in the set of distinct edges.

Determining the set of distinct edges may comprise performing pairwise comparisons between respective pairs of vertices that define the edges of the primitives in the set of primitives to identify instances of edges that are defined by a common pair of vertices, and defining a single instance of an edge defined by the common pair of vertices as a distinct edge.

The method may further comprise storing a mapping to each distinct edge in the set of distinct edges from one or more primitives in the set of primitives that are defined by that distinct edge.

The method may further comprise storing an edge index for each distinct edge in the set of distinct edges, wherein each edge index represents a corresponding distinct edge in the set of distinct edges.

Storing a mapping to a distinct edge against one or more primitives may comprise storing an identifier for each primitive in the set of primitives, the identifier for each primitive being formed of a plurality of respective edge indices, wherein each edge index of the primitive identifier represents a corresponding edge that defines the primitive.

The method may further comprise determining a set of distinct primitives for the set of primitives, each distinct primitive being defined by a different set of vertices from the other distinct primitives in the set of distinct primitives, and storing a mapping to each distinct edge in the set of distinct edges from one or more of the distinct primitives in the set of distinct primitives that are defined by that distinct edge, wherein the determination of whether or not the ray has intersected a primitive is performed only for the distinct primitives in the set of distinct primitives.

Determining the set of distinct primitives may comprise performing pairwise comparisons between respective sets of vertices, each set of vertices defining a primitive in the set of primitives, to identify instances of primitives that are defined by a common set of vertices, and defining a single instance of a primitive defined by the common set of vertices as a distinct primitive.

At least one distinct edge of the set of distinct edges may represent an edge that is shared by two or more primitives in the set of primitives.

The method may further comprise determining a set of distinct vertices for the set of primitives, each distinct vertex being part of at least one primitive of the set of primitives and being defined by a different set of 3D coordinates from the other distinct vertices in the set of distinct vertices, and storing a mapping to each distinct vertex in the set of distinct vertices from one or more edges in the set of distinct edges that are defined by that distinct vertex.

Storing a mapping to a distinct vertex against one or more edges may comprise storing an identifier for each distinct edge, the identifier for each distinct edge being formed of two respective vertex indices, wherein each vertex index of the distinct edge identifier represents a corresponding vertex of the pair of vertices that defines the edge.

The method may further comprise storing vertex data for each distinct vertex in the set of distinct vertices, the vertex data comprising a set of coordinate indices, each coordinate index indicating a 3D coordinate of the vertex.

The method may further comprise projecting each distinct vertex of the set of distinct vertices from a 3D space into 2D ray space.

The edge test to determine which side of a distinct edge the ray passes on may be performed using the results of distinct vertex projection.

The method may further comprise storing the results from the projection of each distinct vertex of the set of distinct vertices.

The edge test to determine which side of a distinct edge the ray passes on may be performed using the results from the projection of distinct vertices of the set of distinct vertices from the 3D space into the 2D ray space.

Performing an edge test to determine which side of a distinct edge the ray passes on may comprise, for each distinct edge, comparing the directed edge with the origin of the ray in 2D ray space and determining whether a direction of edge appears clockwise or anticlockwise with respect to the origin.

The method may further comprise, in response to determining that the ray intersects a primitive, calculating barycentric coordinates for an intersection point at which the ray intersects that primitive.

The method may further comprise, in response to determining that the ray intersects a primitive, determining an intersection distance for an intersection point at which the ray intersects that primitive.

There is provided an intersection testing module, for use in a ray tracing system, configured to perform intersection testing for a ray with respect to a set of two or more primitives, each primitive being defined by an ordered set of edges, each edge being defined by a respective pair of vertices, the intersection testing module being configured to:
determine a set of distinct edges for the set of primitives, each distinct edge being part of at least one primitive of the set of primitives and being defined by a different pair of vertices to the other distinct edges in the set, wherein every edge in the ordered sets of edges that define the set of primitives is represented by a distinct edge of the set of distinct edges;
for each distinct edge in the set of distinct edges, perform an edge test to determine which side of the distinct edge the ray passes on; and
for each primitive in the set of primitives, use a result of the edge test for each distinct edge that defines that primitive to determine whether or not the ray intersects that primitive.

The intersection testing module may further comprise a memory configured to store a mapping to each distinct edge from one or more primitives, and the mapping may comprise an identifier for each primitive in the set of primitives, the identifier for each primitive being formed of a plurality of respective indices, wherein each index of the primitive identifier represents a corresponding edge that is part of the primitive.

The memory may be configured to store vertex data for each unique vertex in a set of distinct vertices, each distinct vertex being part of at least one primitive of the set of primitives and being defined by a different set of 3D coordinates from the other distinct vertices in the set of distinct vertices, and the vertex data may comprise a set of coordinate indices, each coordinate index indicating a 3D coordinate of the vertex.

The memory may be configured to store a mapping to each distinct vertex in the set of distinct vertices against one or more edges in the set of distinct edges that are defined by that distinct vertex, the mapping comprising an identifier for each distinct edge, the identifier for each distinct edge being formed of two respective vertex indices, wherein each vertex index of the distinct edge identifier represents a corresponding vertex of the pair of vertices that defines the edge.

The intersection testing module may be embodied in hardware on an integrated circuit. There may be provided a method of manufacturing, at an integrated circuit manufacturing system, an intersection testing module as described herein. There may be provided an integrated circuit definition dataset that, when processed in an integrated circuit manufacturing system, configures the integrated circuit manufacturing system to manufacture an intersection testing module as described herein. There may be provided a non-transitory computer readable storage medium having stored thereon a computer readable description of an intersection testing module that, when processed in an integrated circuit manufacturing system, causes the integrated circuit manufacturing system to manufacture an integrated circuit embodying an intersection testing module.

There may be provided an integrated circuit manufacturing system comprising: a non-transitory computer readable storage medium having stored thereon a computer readable description of the intersection testing module; a layout processing system configured to process the computer readable description so as to generate a circuit layout description of an integrated circuit embodying the intersection testing module; and an integrated circuit generation system configured to manufacture the intersection testing module according to the circuit layout description.

There may be provided computer readable code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

### BRIEF DESCRIPTION OF THE DRAWINGS

Examples will now be described in detail with reference to the accompanying drawings in which:
Figure 1 shows a ray tracing system configured to perform intersection testing for each of a plurality of rays against nodes of a hierarchical acceleration structure;
Figure 2 shows an example of a region of a scene to be processed using a ray tracing approach;
Figure 3 shows a first method of performing intersection testing;
Figure 4 shows a memory for storing data for a set of primitives that are defined within a region of a scene as illustrated in figure 2;
Figure 5 shows a more detailed method of performing the intersection testing method of figure 3;
Figure 6 shows an intersection testing module for performing the method illustrated in figure 3 and/or figure 5;
Figure 7 shows a computer system in which the intersection testing module of figure 5 is implemented; and
Figure 8 shows an integrated circuit manufacturing system for generating an integrated circuit embodying a graphics processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

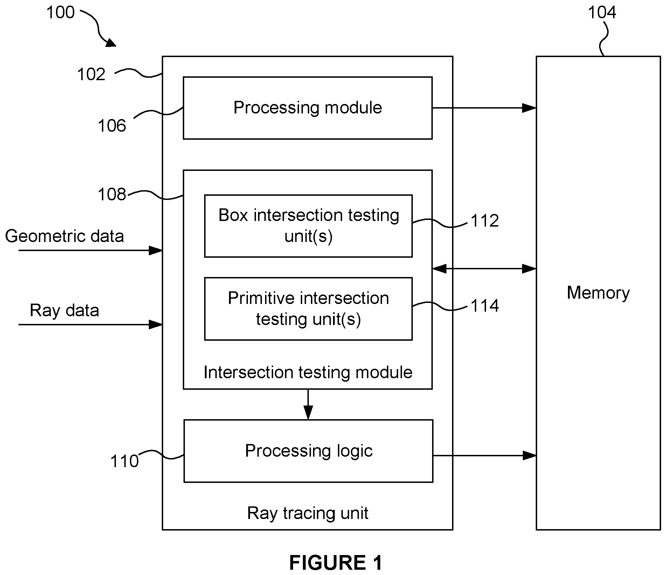

Figure 1 shows a ray tracing system 100 that is configured to perform intersection testing. The ray tracing system comprises a ray tracing unit 102 and a memory 104. The ray tracing unit 102 comprises a processing module 106, an intersection testing module 108 and processing logic 110. The intersection testing module 108 comprises one or more box intersection testing modules 112, and one or more primitive intersection testing modules 114. In operation the ray tracing unit 102 receives geometric data defining objects within the 3D scene. The processing module 106 is configured to generate an acceleration structure based on the geometric data, and to send the acceleration structure to the memory 104 for storage therein. After the acceleration structure has been stored in the memory 104, the intersection testing module 108 can retrieve nodes of the acceleration structure from the memory 104 to perform intersection testing of rays against the retrieved nodes. The results of the intersection testing are provided to the processing logic 110. The processing logic 110 is configured to process the results of the intersection testing to determine processed values representing the image of the 3D scene. The processed values determined by the processing logic 110 can be passed back to the memory 104 for storage therein to represent the image of the 3D scene.

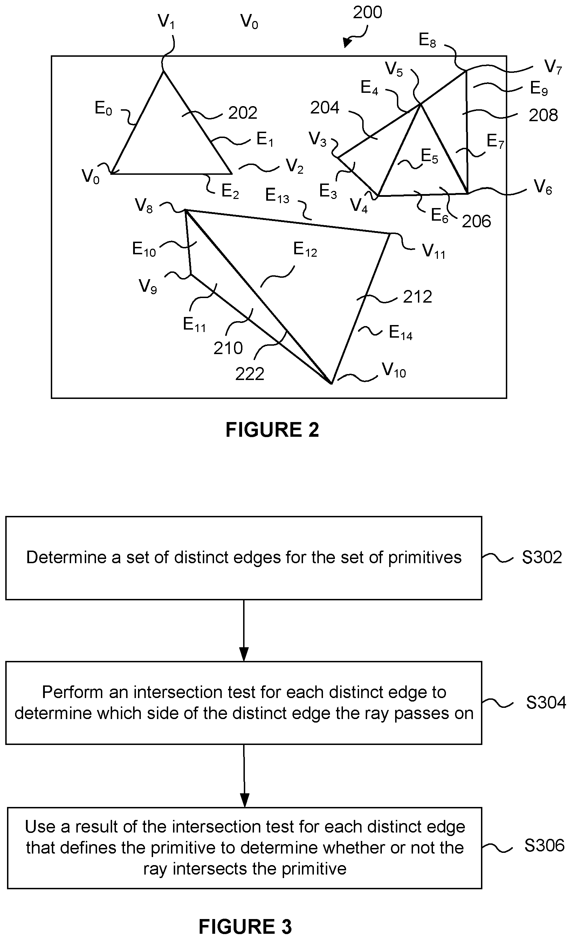

Figure 2 illustrates a region 200 of a scene to be processed using a ray tracing approach. The region 200 may represent the entire scene to be processed. Alternatively, the region 200 may represent a portion of the scene to be processed. The region 200, and therefore the scene, is illustrated in figure 2 as being a two-dimensional scene for simplicity of explanation. However, it will be appreciated that a ray tracing approach is most usually used to process scenes with more than two dimensions, such as three-dimensional scenes, and the following description is also applicable to (and primarily targets) three-dimensional scenes and acceleration structures.

The region 200 of the scene may be an axis-aligned box that dissects the scene into a constituent component. In an example where the scene is a two-dimensional scene, the region 200 of the scene may be a quadrant of the scene. Where the scene comprises multiple regions, each region of the scene may cover a different area (or volume) of the scene. The region 200 of the scene comprises a number of primitives 204-212. In figure 2 the region comprises six primitives. A primitive is a unit of geometry in the system and may for example be a convex polygon. A convex polygon is a polygon with no interior angle greater than 180°. A primitive may, in a more limiting example, be a strictly convex polygon. A strictly convex polygon is a polygon with no interior angle greater than or equal to 180°. In figure 2 each of the primitives 204-212 is illustrated as a triangle (so in particular is guaranteed to be strictly convex, assuming non-zero area). However, in alternative examples the primitive may be a different shape. Examples of shapes from which primitives may be formed are squares, rectangles, pentagons and hexagons. Some primitives might not be polygons, let alone convex polygons.

A ray (r) can be defined as ***r*** = ***O*** + ***D**t* where ***O*** is a vector which represents the ray origin, D is a vector which represents the ray direction and t represents a distance, as a multiple of the ray direction vector D (also known as a multiple of ray lengths), along the ray from the origin. A primitive (e.g., triangle) is defined by a set of vertices whereby consecutive pairs of vertices define the edges of the primitive. For example, primitive 202 in region 200 comprises three vertices V₀, V₁, V₂. The vertices may be ordered such that V₀ is defined as the first vertex of the primitive 202, V₁ is the second vertex of the primitive and V₂ is the third vertex of the primitive. The ordering of the vertices that define a primitive may otherwise be referred to as the "vertex winding order" of the primitive. The vertex winding orders of two primitive are considered equivalent if they differ only by cycling vertices. In other words, only "odd" permutations of vertices are considered to represent a different winding order between one primitive and another. Thus, a first primitive may be determined to be distinct from a second primitive even if both primitives are defined by the same vertices, if the order of those vertices differs between the two primitives by an odd permutation (e.g., ordered back to front). The primitive 202 may further comprise three (directed) edges E₀, E₁, E₂, each edge being defined by a corresponding (ordered) pair of vertices. The two vertices that define a primitive edge may otherwise be referred to as the "endpoints" of the edge. The edges may be ordered such that the first edge E₀ is defined by the pair of vertices V₀, V₁, the second edge E₁ is defined by the pair of vertices V₁, V₂, and the third edge E₂ is defined by the pair of vertices V₂, V₀, otherwise referred to as the "edge winding order" of the primitive. The edge winding orders of two primitives are considered equivalent if they differ only by cycling edges. For a primitive, its edge winding order can be deduced from its vertex winding order and vice versa, therefore they may both be referred to as a single "winding order". This primitive winding order can be used to indicate that the front face of the primitive is observed from a particular viewpoint (i.e., associated with a ray intersection), given a fixed orientation for front-facing (i.e., clockwise or anticlockwise). The origin and direction vectors defining the ray, and the positions of the vertices defining the primitive can be represented with components in a space-coordinate system. The space-coordinate system may represent a world space of the scene being processed, or it may represent an instance space of an object instance that is placed within the scene being processed. In total, the region 200 of figure 2 can be seen as comprising 15 edges E₀-E₁₄ and 12 vertices V₀-V₁₁. Each edge, and each vertex, of the region 200 defines at least one of primitives 202-212.

To determine whether a ray intersects a primitive, an intersection point of a ray and the plane containing that primitive can be determined. It can then be determined whether the intersection point is inside the primitive. The determination of whether the intersection point is within the primitive can be performed by performing an "edge test" for each of the edges in the primitive. An edge test is a test that determines which side of the edge the ray passes on, from the point of view of the ray (i.e., positioning an "eye" at the ray's origin, "looking" along the ray direction vector, and determining whether the centre of the view is passing to the left or right of the edge, with respect to the edge's direction). The ray may either pass on the left side of the edge or on the right side of the edge. If the ray is determined to pass on the same side of each of the edges in the primitive (e.g., on the right-hand side of all of edges E₀, E₁ and E₂ of primitive 202), then it can be determined that the intersection point for the ray in the plane of the primitive is inside the primitive. This is known as a primitive intersection, or a "hit". If the intersection point for the ray in the plane of the primitive is determined to pass on a different side of at least one of the edges in the primitive to the others of the edges (e.g., on the right-hand side of all of edges E₀ and E₁, but on the left-hand side of E₂ of primitive 202), then it can be determined that the intersection point for the ray in the plane of the primitive is outside the primitive. This is known as a "miss".

Often, a scene to be processed comprises objects that are made up of multiple primitives. In region 200, a first object is represented by primitive 202, a second object is represented by primitives 204, 206 and 208, and a third object is represented by primitives 210 and 212. Where an object is made up of multiple primitives, the primitives of that object may share at least one common edge as well as a set of shared vertices. A shared edge between two primitives may be defined where each of the end points of the edge is a vertex that is shared by the two primitives. That is, the two vertices of an edge that is shared by two primitives can be described as defining both of those primitives. Thus, where two or more primitives share an edge, those primitives also share at least the two vertices that define that edge. In the second object of region 200, primitives 204 and 206 share a common edge E₅ (with common vertices V₄ and V₅), and primitives 206 and 208 share a common edge E₇ (with common vertices V₅ and V₆). Similarly, in the third object of region 200, primitives 210 and 212 share a common edge E₁₂ (with common vertices Va and V₁₀). The orders of common vertices in edges shared by two primitives may be different, and are generally opposite to each other (e.g., for common edge E₅ the ordering of vertices is V₅, V₄ in primitive 204 and V₄, V₅ in primitive 206, assuming winding orders leading to clockwise orientations).

In known intersection testing methods, each primitive in a region of a scene to be rendered may be processed independently against a common ray. That is, looking at region 200, each of primitives 202-212 may be processed independently of each other. This means that, for each primitive, edge testing is performed for each of the edges of the primitive and the results of those tests are used to determine whether there is a hit between the ray and the primitive. This means that, where an edge is shared by two or more primitives, that edge is processed more than once - one time for each of the primitives that is defined by that edge. For example, in region 200 edge E₅ will be processed for a first time as part of primitive 204, and for a second time as part of primitive 206. Correspondingly, edge E₇ will be processed for a first time as part of primitive 206 and for a second time as part of primitive 208. Processing the same edge multiple times can be seen as an inefficiency of known intersection testing methods, as it involves duplication of the same processing operation.

An improved intersection testing method is illustrated in figure 3. This method tests a common ray against a set of primitives comprising two or more primitives. The set of two or more primitives may belong to the region of the scene illustrated in figure 2. The method is initiated at step S302, where a set of distinct edges is determined for the set of primitives. A distinct edge is a single instance of an edge that defines at least one primitive in the set of primitives. A distinct edge may otherwise be referred to as a unique edge, as there is only one instance of that edge within the set of distinct edges. The set of distinct edges does not include copies of the same edge. In other words, no two edges with the same pair of vertices will appear in the set of distinct edges. That is, one distinct edge in the set of distinct edges is used to represent every instance (or occurrence) of a corresponding edge that is part of at least one primitive of the set of primitives. For example, in region 200 where primitives 204 and 206 share a common edge E₅, a single instance of that edge E₅ may be defined in the set of distinct edges irrespective of the fact that there are two primitives that are defined by that edge. Every edge in the ordered sets of edges that define the set of primitives is represented by a distinct edge of the set of distinct edges. That is, all of the instances of edges within the set of primitives are represented by one of the distinct edges of the set of distinct edges. As mentioned above, the edge of a primitive is defined by a (unordered) pair of vertices. Thus, repeat instances of the same edge may be defined as more than one instance of an edge that is defined by the same pair of vertices. This means that every edge in the ordered sets of edges that define the set of primitives is represented by an unordered distinct edge of the set of distinct edges.

The set of distinct edges may be determined by comparing each edge in the set of primitives to the other edges in the set of primitives. Each edge in the set of primitives defines at least one of the primitives in the set. An edge may be considered to define a primitive if it is part of that primitive. Similarly, for completeness, a vertex may be considered to define a primitive and/or edge if it is part of that primitive/edge. The comparison between edges may comprise performing pairwise comparisons between respective pairs of vertices that define those edges to identify instances of edges that are identified by a common pair of vertices. A single instance of an edge identified by the common pair of vertices is a distinct edge. A pairwise comparison is a comparison between pairs of data values (i.e., the pair of vertices of each edge). Thus, determination step S302 may comprise comparing a first pair of vertices that define a first edge in the set of primitives to a second pair of vertices that define a second edge in the set of primitives. As the set of distinct edges comprises only one instance of each edge in the set of primitives, each distinct edge is defined by a different pair of vertices from the other distinct edges in the set of distinct edges. A first pair of vertices (and so a first edge defined by that pair of vertices) may be determined to be different from a second pair of vertices (and so a second edge defined by that pair of vertices) if at least one vertex in the first pair of vertices is different from those of the second pair of vertices. A first edge in the set of primitives is determined to be the same as (i.e., a repeat instance of) a second edge in the set if the pairs of vertices defining each of those two edges is the same. The comparison of vertices may be performed by observing the world space coordinates of those vertices and determining whether or not those coordinates are the same. If the first pair of vertices of the first edge is determined to be different from all of the pairs of vertices defining the remaining edges in the set of primitives, then the first edge is defined to be part of the set of distinct edges. The determination that a first pair of vertices is different from the remaining pairs of vertices in the set of primitives may be performed by scanning the entire set of vertices and, on identifying the last occurrence of a specific pair of vertices (i.e., identifying a specific edge), defining that last occurrence as a distinct edge. In another example, the determination may be performed by comparing data (e.g., the pair of vertices) identifying a specific edge to the data defining the unique edges in a current list of distinct edges, and defining the specific edge as a distinct edge if it has not yet been included in the current list. In a further example, the entire set of edges in the set of primitives may be ordered (e.g., lexicographically) which would place duplicate edges next to each other. The edges may then be scanned sequentially to identify duplicates and to define only one instance of each edge as a distinct edge. The set of distinct edges only comprises one instance of each edge that is present within the set of primitives. For example, the set of distinct edges only comprises one instance of edge E₅, even though this edge is part of two primitives 204 and 206. At least one distinct edge of the set of distinct edges may represent an edge that is shared by two or more primitives in the set of primitives. In other words, the set of distinct edges may comprise at least one distinct edge that represents two or more instances of a common edge within the set of primitives.

In a first example, the set of distinct edges may be defined by treating each edge that defines a primitive of the set of primitives as an undirected edge. This means that each distinct edge that is defined within the set of distinct edges may be an undirected edge. An undirected edge is an edge for which the ordering of the vertices that define that edge is not taken into account. That is, an undirected edge is defined by its two vertices but not the ordering of those vertices. An undirected edge may otherwise be referred to as an unordered edge. An undirected edge may be used to define two directed, or ordered, edges. For example, the undirected edge {a, b}, where a and b are vertices that define the endpoints of the edge, may be used to denote both of directed edges (a, b) and (b, a). Each of the edges stored within the set of distinct edges may be an unordered, or undirected, edge. In this example, where the edges in a set of primitives comprise directed edge (a, b) and directed edge (b, a), the set of distinct edges may comprise a single instance of the undirected edge {a, b} that represents both of these edges. Defining the distinct edges of the set of distinct edges is advantageous as it reduces the total amount of edge data defined by the set (e.g., by half). In a second example, the set of distinct edges may be determined by treating each edge as a directed, or ordered, edge. In this alternative example, each edge that is defined in the distinct edges may be an ordered edge. This means that each distinct edge that is defined within the set of distinct edges may be a directed edge. In this example, where the edges in a set of primitives comprise directed edge (a, b) and directed edge (b, a), the set of distinct edges may comprise one instance of each of these two directed edges. Once the set of distinct edges has been defined, and as this process involves parsing all of the edges in the set of primitives to remove repeat instances of edges that are defined by the same pair of vertices, every edge that defines a primitive of the set of primitives is represented by a distinct edge of the set of distinct edges. That is, the set of distinct edges for a set of primitives represents, collectively, all of the instances of edges within the set of primitives.

Once the set of distinct edges has been determined, the method proceeds to step S304 at which, for each distinct edge in the set of distinct edges, an edge test is performed to determine which side of the distinct edge the ray passes on. That is, at step S304, an edge test is performed for each of the distinct edges in the set of distinct edges. Step S304 may be performed consecutively for each edge in the set of distinct edges, or alternatively may be performed for two or more of the edges in the set of distinct edges in parallel. An edge test is performed once for each distinct edge in the set of distinct edges. An edge test is performed for each distinct edge without consideration as to the number of primitives that are defined by the edge (i.e., the number of primitives that that edge is part of, e.g., 1 or 2). In other words, edge testing is performed for each distinct edge of a set of distinct edges individually, irrespective of whether or not an edge is part of two or more of the primitives in the set of primitives. This means that duplicative processing of edges that are shared by two or more primitives is avoided.

An edge test may compare data defining an edge to be tested with the ray. The test may determine whether the direction of the edge appears clockwise or anticlockwise with respect to the ray origin and direction. In a first example, the test calculates a signed volume of the 3D tetrahedron spanned by the ray origin, the ray direction and the two ordered vertices of the edge. The term "signed" volume, means that either reversing the ray direction or transposing the order of the two vertices of the edge results in a volume with the same absolute value but opposite sign. This signed volume may be referred to as the "triple product" of the ray and the edge. In a second example, the test transforms (e.g., translates and projects) the two ordered vertices of the edge into "2D ray space", in a manner dependent on the ray origin and direction and calculates a signed area of the 2D triangle spanned by the 2D ray-space origin and the two ordered 2D vertices of the edge. By "signed" area, we mean that transposing the order of the two vertices of the edge results in an area with the same absolute value but opposite sign. This signed area may be referred to as the "2D cross product" of the edge. The sign of the volume/area is used to determine the side of the edge that the ray passes on. A positive sign may indicate that the intersection is on the left side of the edge. A negative result may indicate that the intersection is on the right side of the edge. Alternatively, a positive sign may indicate that the directed edge passes the intersection in the anticlockwise direction, and a negative sign may indicate that the directed edge passes the intersection in the clockwise direction. The magnitude of the volume/area is used for barycentric calculations, which is described in further detail below. Once an edge test has been performed for each distinct edge in the set of distinct edges, the method moves on to step S306.

At step S306 it is determined, for each primitive in the set of primitives, whether or not the ray intersects that primitive. This determination is made using the results of the edge tests for each distinct edge that defines that primitive. The determination is made using solely the results of the edge tests for each distinct edge (i.e., the edge tests that are performed on distinct edges), with appropriate sign modification, instead of duplicating tests for any/all of the non-distinct edges that define the set of primitives. That is, for each primitive the edge test result for each distinct edge that defines the primitive is observed. The edge test results are then compared. More specifically, the signs (i.e., positive/negative) of the edge test results for each edge of the primitive are compared. The ray may be determined to intersect the primitive If the results of the edge tests for all of the distinct edges that define that primitive indicate that the ray passes on the same side of each of the edges of the primitive. In other words, the ray may be determined to "hit" the primitive if the ray passes on the same side of each of the edges of that primitive. If the ray passes on the same side of each of the edges of the primitive, then the ray may be said to pass "inside" the primitive. The side of an edge on which the ray is determined to pass may be dependent on the direction, or vertex order, of the edge. The direction of each edge may, in turn, be dependent on the winding of the primitive. This is explained in further detail below.

Where the distinct set of edges comprises ordered distinct edges, primitive testing can be performed straightforwardly by directly comparing the signs of the edge test results for each of the distinct edges that define that primitive. Where the distinct set of edges comprises undirected distinct edges, then the ordering of distinct edges within each primitive must be derived at step S306 in order for the edge test results from those edges to be compared. If a distinct (undirected) edge {a, b} is defined within the set of distinct edges but a primitive comprises the ordered edge {b, a}, then the edge testing result for the distinct edge (a, b) must be reversed for use in primitive testing step S306. In other words, the sign defining the edge testing result must be changed from positive to negative, or vice versa.

The method described above provides a quick and efficient intersection testing method for sets of primitives comprising two or more primitives. Known intersection testing methods comprise determining an intersection between a ray and a primitive by performing an edge test for each edge in the primitive without considering whether that edge is shared by two or more primitives. By determining a set of distinct edges for a set of primitives, which removes repeat instances of the same edge, the overall number of edge tests that have to be performed for the set of primitives is reduced. This increases the efficiency of the intersection testing method, and therefore the reduces the latency of a ray tracing system implementing that method. Correspondingly, where the intersection testing method described above is implemented in hardware, the amount of hardware space required to implement the method is reduced.

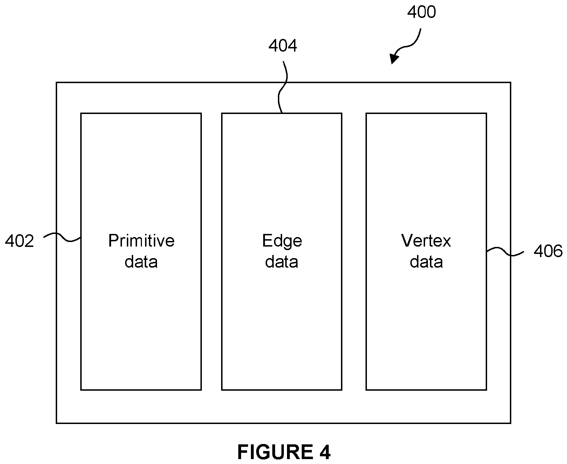

The method of figure 3 may further comprise storing data defining each of the distinct edges that is determined to be part of the set of distinct edges. The data defining each of the distinct edges may be stored in a memory as illustrated in figure 4. The memory 400 is configured to store data for the primitives comprised within a region of a scene to be processed, such as region 200. The memory may be configured to store data for one set of primitives at a time. The region of the scene comprises a set of primitives The memory 400 is configured to store data indicating each of the vertices, edges and primitives comprised within the set of primitives. The memory 400 may comprise a first portion 402 configured to store primitive data, a second portion 404 configured to store edge data and a third portion 406 configured to store vertex data. The memory 400 may be referred to as a geometry block storage, as it stores data relating to the geometry of a set of primitives.

Data defining each of the distinct edges for the set of primitives may be stored in the second portion 404 of the memory 400. The second portion 404 of the memory 400 may be distinct from the first and third portions of the memory, for example it may be a memory bank within the memory. The second portion 404 of the memory may be filled by writing edge data for each distinct edge of the set of distinct edges to the second portion as it is defined in step S302. Alternatively, a complete set of edge data may be initially written to the second portion 404 of the memory, and repeat instances of edges that define two or more primitives may be merged, or removed from, or not written to the memory, to store the data for the set of distinct edges as the set is defined in step S302 only. Either way, by the end of step S302 the memory may contain data relating only to single instances of edges within the set of primitives. Copies of data for the same edge are not stored in the second portion 404 of the memory.

The division of the primitives in a scene to be rendered into sets of primitives, and the determination and storage of distinct primitives, edges and vertices, may be performed during creation of the scene acceleration structure. As explained above, the acceleration structure is created prior to intersection testing (i.e., in an "offline" pre-processing stage). In other words, intersection testing can be performed for a ray (e.g., in a recursive manner) using the acceleration structure. Thus, by determining the distinct primitives, edges and vertices in a region of a scene prior to intersection testing, duplicates of these entities can be removed to realise the increased efficiency advantages. The determination only has to be performed once, during building of the acceleration structure, so that sets of primitives can be selected from the determination during intersection testing. As the building of an acceleration structure is a normal step that is performed during ray tracing operations, the determination of sets of primitive and the distinct geometries within these sets during this step allows for its efficient integration into ray tracing systems. The determination of distinct primitives, edges and vertices may be performed by a scene hierarchy builder. The determination of distinct primitives, edges and vertices may be performed upfront (i.e., offline). A triangle pairing scheme, such as a geometry grouping/clustering scheme, may be used to increase the efficiency of identifying duplicate vertices, edges and primitives. The memory of figure 4 may further comprise additional information regarding the set of primitives. Such data may comprise one or more of a geometry component index, a global vertex base index, a list of global vertex index offsets and/or a set of geometry flags/masks. This data may or may not be used by the intersection testing module 108. Where the data is not used by the intersection testing module, it may not be fed into the intersection testing module at all. Alternatively, it may bypass the intersection testing module as sideband data.

The method of figure 3 may further comprise storing a mapping to each distinct edge in the set of distinct edges, from one or more primitives in the set of primitives that are defined by that distinct edge. The mapping from each distinct edge may be stored in the memory 400. More specifically, the mapping may be stored in the first portion 402 of the memory 400. The first portion 402 of the memory is configured to store primitive data for the local set of primitives. The first portion 402 of the memory may store raw data for each primitive. The first portion 402 of the memory may alternatively be configured to store, for each primitive, an identifier for that primitive. The identifier for each primitive may be formed of a plurality of respective edge indices. That is, each primitive identifier may be formed of a number of indices of edges that define (i.e., are part of) that primitive. Each edge index of a primitive identifier may represent a corresponding edge that defines the primitive, which may be used to derive the location of the distinct edge data within the second portion 404 of the memory 400. The first portion 402 of the memory 400 may be distinct from the second and third portions of the memory, for example it may be a memory bank within the memory. The first portion of the memory may be filled by writing primitive data for each distinct primitive of the set of distinct primitives to the first portion of the memory. Alternatively, a complete set of primitive data may initially be written to the first portion 402 of the memory, and repeat instances of primitives may be merged, or removed from, or not written to the memory, to store the data for the set of distinct primitives. Either way the memory may eventually contain data relating only to single instances of primitives within the set of primitives. Copies of data for the same primitive are not stored in the first portion 402 of the memory.

Each edge index that defines a primitive identifier may represent a corresponding distinct edge of the set of distinct edges. Each primitive identifier may be formed of a number of edge indices which is equal to the number of edges that define that primitive. The edge indicators may be ordered, within the primitive identifier, according to the order in which the edges define the primitive (i.e., the winding order of the primitive). Where each primitive in the set of primitives is formed of three edges, each primitive identifier may comprise three edge indices. The primitive identifiers may be stored in a list of the first portion 402 of the memory. Each primitive identifier may be formed of a specified number of bits, where at least one bit is used to denote each edge index of the identifier. In one example, where each primitive in the set of primitives comprises three edges, each primitive identifier may be formed of 12 bits. In this example, the identifier may use four bits to represent each edge index for the primitive. As each edge index denotes a distinct edge, an edge index may be shared by two or more primitive identifiers. This indicates that the distinct edge identified by that index is part of two or more corresponding primitives. In this way, the primitive identifiers can be used to map primitives in the set of primitives to distinct edges that define that primitive. The list of primitive identifiers may include unused entries that are reserved for null primitives. Null primitives are entries in a list of primitive identifiers that do not contain data for a valid primitive. Storing null primitives alongside valid primitive encodings means that the number of primitives in the set of primitives can be inferred from the primitive identifiers alone, alleviating the need to store a separate identifier indicating the number of primitives in the memory.

It is mentioned above that, if the distinct set of edges comprises undirected distinct edges, then the ordering of distinct edges within each primitive must be derived at step S306 in order for the edge test results from those edges to be compared. The ordering of edges within each primitive of the set of primitives may be defined by observing the edge indices defining the primitives. More specifically, a primitive identifier may encode the direction of each edge that defines the primitive. This encoding is determined by comparing the unordered vertex indices of all but the last edges in the primitive, e.g., the first two edges in the primitive for a triangle primitive. A tabular illustration of how two unordered vertex indices in a primitive may be used to derive the orientation of a primitive is provided below. Note that the unordered vertices deriving the final edge of a primitive (e.g., Ez for a triangular primitive) can be derived from the vertices of the preceding edges, as the final edge of a primitive must share a vertex with both the first and the penultimate edge of that primitive. The encoding of primitive identifiers may have a level of redundancy (not illustrated below) that accounts for combinations of vertices that do not form a primitive:

| Edge order | | | Directed edges | | | Edge sign bits | | | Vertex order | | |
|---|---|---|---|---|---|---|---|---|---|---|---|
| E₀ | E₁ | E₂ | E₀ | E₁ | E₂ | S₀ | S₁ | S₂ | V₀ | V₁ | V₂ |
| (a, b) | (b, c) | (a, c) | (a, b) | (b, c) | (c, a) | 0 | 0 | 1 | a | b | c |
| (b, c) | (a, c) | (a, b) | (b, c) | (c, a) | (a, b) | 0 | 1 | 0 | b | c | a |
| (a, c) | (a, b) | (b, c) | (c, a) | (a, b) | (b, c) | 1 | 0 | 0 | c | a | b |
| (a, c) | (b, c) | (a, b) | (a, c) | (c, b) | (b, a) | 0 | 1 | 1 | a | c | b |
| (a, b) | (a, c) | (b, c) | (b, a) | (a, c) | (c, b) | 1 | 0 | 1 | b | a | c |
| (b, c) | (a, b) | (a, c) | (c, b) | (b, a) | (a, c) | 1 | 1 | 0 | c | b | a |

The three or more edge sign bits are used in step S306 to post-modify the signs of the edge test results, ensuring that the intersection comparison is made correctly. By encoding edge sign bits in faces, the edge test can generate a signed result for a single direction of each edge only. This avoids needing to calculate and store signed edge results for both directions of every edge, and therefore reduces computational effort and storage requirements. It also avoids having to store a direction bit per edge at additional overhead, when it can be implicitly derived from the edge ordering of a primitive given by the primitive identifier.

The mapping to each distinct edge from one or more primitives in the set of primitives that are defined by that edge may, once edge testing has been performed on the distinct edges, be used to determine edge test results for the primitives in the set of primitives. That is, the mappings referenced above may be used such that edge test results that have been obtained for the distinct edges that define a primitive may be fetched for the primitive testing of that primitive. In this way, in cases where a distinct edge defines a shared edge of two or more primitives, edge testing results for that distinct edge can be used in intersection testing for each of the primitives that shares its edge.

In addition to comprising duplicate edges and vertices that are shared by two or more primitives, a region of a scene to be processed may also comprise more than one instance of the same primitive. A repeat instance of a primitive may be defined where a region of a scene comprises two or more occurrences of a polygon that share all of the same edges and vertices. The method of figure 3 may further comprise, in addition to determining a set of distinct edges, determining a set of distinct primitives for the set of primitives. That is, in cases where a repeat instance of a primitive is identified, the method may comprise defining only one instance of that primitive within the set of distinct primitives. Thus, copies of a primitive are not defined within the set of distinct primitives. A distinct primitive may otherwise be referred to as a unique primitive, as there is only one instance of that primitive that is defined within the set of distinct primitives. Each distinct primitive may be defined by a different set of vertices, or edges, from the other distinct primitives in the set of distinct primitives. As with the definition of the distinct set of edges, the definition of a distinct set of primitives may be performed during building of an acceleration structure.

The comparison between primitives in order to determine the set of distinct primitives may comprise performing comparisons between respective sets of vertices that define the primitives in the set of primitives to identify instances of primitives that are defined by a common set of vertices, and defining a single instance of a primitive defined by the common set of vertices as a distinct primitive. The comparison may alternatively comprise performing comparisons between respective sets of edges of the primitives in the sets of primitives to identify instances of primitives that are defined by a common set of edges, and defining a single instance of a primitive defined by the common set of edges as a distinct primitive. The comparisons between vertices and/or edges to determine the set of distinct primitives may be pairwise comparisons. A first primitive in the set of primitives is determined to be the same (i.e., a repeat instance) a second primitive in the set if the sets of ordered vertices/edges defining each of those two primitives is the same. A first set of ordered vertices/edges is determined to be the same as a second set of ordered vertices/edges if all of the vertices/edges of the first set are the same as all of the vertices/edges of the second set, and if the vertices/edges of the two sets are arranged in the same order (such that the primitives defined by each set have the same winding order). In other words, a first and second primitive may be determined to be the same if those primitives share all of their ordered vertices/edges. The comparison of vertices may be performed by observing the world space coordinates of those vertices and determining whether or not those coordinates are the same. The comparison of vertices/edges may be performed by observing whether identifiers defining each vertex/edge are the same. If repeat instances of the same primitive are identified within the set of primitives, then only one instance of that primitive is defined within the set of distinct primitives. The mapping to each distinct edge from one or more primitives, as defined above, may more specifically comprise mapping each distinct edge against one or more distinct primitives in the set of primitives. As mentioned above this mapping may be stored in the first portion 402 of the memory 400.

It is worth noting that, although a first distinct primitive may have the same vertices as a second distinct primitive, it may have a different vertex order to the second distinct primitive. In this scenario, test results obtained for the first distinct primitive may be used to expedite testing of the second distinct primitive. More specifically, an indication of permutation may be included within each of the identifiers that is generated for a distinct primitive. One primitive test may be performed for a first instance of an unordered set of vertices (e.g., for the first distinct primitive). The results of the primitive test for the first distinct primitive may then be modified by the permutation indicated in the identifier of the second distinct primitive to obtain correct barycentric and orientation calculation results (and therefore also possibly hit calculation results, assuming orientation culling) for the second distinct primitive. This technique further increases the efficiency of the intersection testing unit, as identical but expensive barycentric and distance calculations do not have to be performed for each permutation of a primitive's vertices.

The determination of whether or not the ray has intersected a primitive may be performed only for the distinct primitives in the set of primitives. That is, the determination may be performed once for each instance of a primitive within the set of primitives. Where a set of primitives comprises multiple instances of the same primitive, the determination may be performed for only one of the instances of that primitive. Thus, defining a set of distinct primitives and determining whether or not the ray has intersected only the distinct primitives in that set of distinct primitives may further reduce the computational overhead and increase the efficiency of the intersection testing method described herein.

The method of figure 3 may further comprise determining a set of distinct vertices for the set of primitives. Each distinct vertex of the set of primitives may define, or be part of, at least one primitive in the set of primitives. A distinct vertex may otherwise be referred to as a unique vertex, as there is only one instance of that vertex within the set of distinct vertices. The set of distinct vertices may be determined by deleting repeat instances of the same vertex in the set of vertices. The set of distinct vertices may be determined by merging, or deleting, or not writing, repeat instances of the same vertex in the set of vertices. Copies of repeat instances of the same vertex are not defined within the set of distinct vertices A vertex is usually defined by a set of 3D (three-dimensional) coordinates within the scene to be processed, and so repeat instances of the same vertex may be defined as more than one instance of a vertex that is defined by the same set of 3D coordinates. This means that each distinct vertex within the set of distinct vertices is defined by a different set of 3D coordinates from the other distinct vertices in the set of distinct vertices. A set of 3D coordinates for a first vertex may be determined to be different to a second set of 3D coordinates for a second vertex if at least one of the 3D coordinates for the first vertex is different from those of the second vertex.

The method may further comprise storing a mapping to each distinct vertex in the set of distinct vertices from one or more edges in the set of distinct edges that are defined by that distinct vertex. The mapping may be stored in the memory 400. More specifically, the mapping may be stored in a second portion 404 of the memory. The second portion 404 of the memory is configured to store edge data for the set of distinct edges that is defined for the set of primitives. The second portion 404 of the memory may store raw data for each distinct edge. The second portion 404 of the memory may alternatively store an identifier for each distinct edge. The identifier for each distinct edge may be formed of a pair of respective vertex indices. That is, the identifier for each distinct edge may be formed, each indicator defining a vertex (or endpoint) of the edge. In other words, each edge identifier may be formed of two indicators of vertices that define that primitive. The vertex indicators may be ordered, within the edge identifier, according to the default order (i.e., the canonical order) in which the vertices define the edge. Each vertex index of an edge identifier may represent a corresponding vertex of the pair of vertices that defines that edge. That is, each edge identifier that is stored in the second portion 404 of the memory may indicate the vertices that define the edge that is identified by that identifier. The edge identifiers may be stored in a list of the second portion 404 of the memory. Each edge identifier may be formed of a specified number of bits, where at least one bit is used to denote each vertex index of the identifier. In one example, each edge identifier may be formed of six bits. In this example, the identifier may use three bits to represent each vertex index for the edge. An advantage of using six bits to form each edge identifier is that this number of bits is sufficient to encode edges, whose endpoints are a pair of unordered vertices, for a set of up to nine vertices. As the two endpoints of an edge cannot be the same, and assuming that the canonical ordering of vertex endpoints in edges is vₙ, vₙ₊₁, then the first index cannot be 8 and the second index cannot be 0. Therefore, a bit string of six zeros can be used to represent a 0 index for the first vertex, and an 8 index for the second vertex without aliasing issues. Some entries in the list of edge identifiers may be reserved for null edges, which are entries that do not contain data for a valid edge (e.g., an edge with duplicate endpoint vertices). A vertex index may be shared by two or more edge identifiers. This indicates that the distinct vertex identified by that index is part of two or more corresponding edges. In this way, the edge identifiers can be used to map edges in the set of edges to distinct vertices that define that edge.

The method may further comprise storing vertex data for each distinct vertex in the set of distinct vertices. The vertex data for each distinct vertex may be stored in a third portion 406 of the memory 400. That is, a single instance of each of the vertices comprised within the set of primitives may be stored within the third portion 406 of the memory 400. The vertex data for each distinct vertex may comprise a set of coordinate indices, each coordinate index indicating a 3D coordinate of the vertex. A first coordinate index may indicate the value of the X coordinate for the vertex. A second coordinate index may indicate the value of the Y coordinate for the vertex. A third coordinate index may indicate the value of the Z coordinate for the vertex. Each vertex identifier may be stored in a table of the third portion 406 of the memory. Each vertex identifier may be formed of a specified number of bits. In one example, each vertex identifier may be formed of 96 bits. In this example, the identifier may use 32 bits to represent each coordinate of the vertex in world space. Each coordinate value, in this example, is a single-precision floating point value of a 3D coordinate in the scene. Each vertex identifier may store raw data for a vertex. That is, each vertex identifier may comprise unrefined, or unprocessed, data defining the vertex. The coordinates of the vertex in 3D space may be defined as raw data. The third portion 406 of the memory 400 may be distinct from the first and second portions of the memory, for example it may be a memory bank within the memory. The third portion of the memory may be filled by writing vertex data for each distinct vertex of the set of vertex to the third portion of the memory. Alternatively, a complete set of vertex data may initially be written to the third portion 406 of the memory, and repeat instances of vertices may be merged, or removed from, or not written to the memory, to store the data for the set of distinct vertices. Either way the memory may eventually contain data relating only to single instances of vertices within the set of primitives. Copies of data for the same vertex are not stored in the third portion 406 of the memory.

Thus, the first 402, second 404 and third 406 portions of the memory 400 may be used to cross-reference primitives in the set of primitives to distinct edges and vertices that define that primitive. The first portion 402 of the memory may be used to identify the distinct edges that are part of each primitive. The second portion 404 of the memory may be used to identify the distinct vertices comprised within each distinct edge, where a distinct edge is part of at least one primitive. The third portion 406 of the memory may be used to determine the real-world coordinate data of each distinct vertex, where a distinct vertex is part of at least one primitive/edge. The memory 400 may be configured to store distinct primitive, edge and vertex data for a predefined maximum number of primitives. For example, the memory may be configured to store primitive, edge and vertex data for six primitives. Thus, the intersection testing unit may be configured to perform intersection testing for a set of up to six primitives at a time. In order to select the set of primitives for which data is stored in the memory, a scene to be processed may be parsed and each primitive may be assigned into a group containing a maximum of six primitives (note one of the groups may contain fewer than six primitives if the total number of primitives in the scene is not divisible by six) . The group of six primitives may be identified after some coherency sorting has occurred (e.g., via use of a triangle pairing algorithm such as a geometry grouping/clustering algorithm). Alternatively, the group of six primitives may be selected from a larger window of primitives in a list or stream, which affords better deduplication of edges and/or vertices. The memory 400 may also or alternatively be configured to store a vertex data for a maximum number of distinct vertices, such as 9 vertices. The memory may also or alternatively be configured to store edge data for a maximum number of distinct edges, such as 14 edges. That is, the memory may have a threshold value for the number of primitives and/or edges and/or vertices that it can store data for. Where the memory has a threshold value for two or more of these entities, it may stop storing primitive data when a first of these threshold values is met.

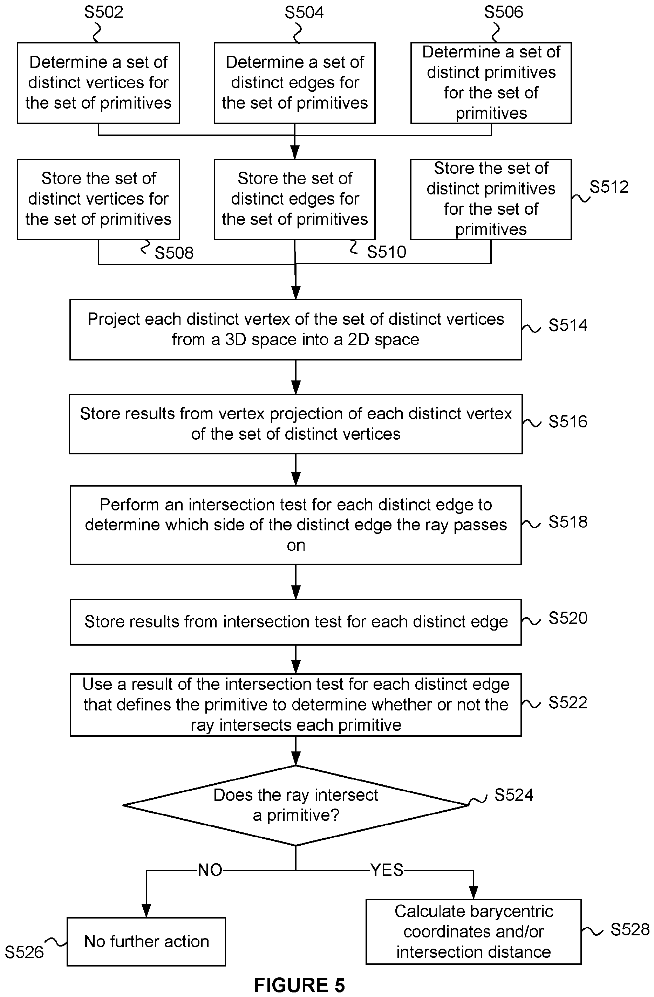

A more detailed version of the method illustrated in figure 3 is illustrated in figure 5. As with figure 3, the method of figure 5 is configured to perform intersection testing for a common ray against a set of primitives comprising two or more primitives. Although the steps of method 5 are illustrated in a specific order, it would be appreciated that these steps may be performed in an alternative order. Steps S504, S518 and S522 of figure 5 correspond to steps S302, S304 and S306 of figure 3 respectively. In addition to this, the method of figure 5 comprises a step S502 in which a set of distinct vertices for the set of primitives is determined, and a step S506 in which set of distinct primitives for the set of primitives is determined. Both of method steps S502 and S506 are also described in further detail above. Steps S502, S504 and S506 may be performed in parallel within the method of figure 5. That is, the distinct sets of vertices, edges and primitives for a set of primitives may be defined at the same time. The distinct sets may be defined during creation of the scene acceleration structure. The determination of distinct primitives, edges and vertices may be performed by a scene hierarchy builder.

The method of figure 5 also comprises method steps S508, S510 and S512, in which each of the sets of distinct vertices, edges and primitives are stored. The sets of distinct vertices, edges and primitives may be stored in a memory corresponding to memory 400 of figure 4. The storage of these entities is also described in further detail above. The storage of these entities may comprise storing data defining each entity. Storing the set of distinct vertices, as defined in step S508, may comprise storing raw coordinate data defining each vertex in world space. Storing the set of distinct edges, as defined in step S510, may comprise storing a mapping of each distinct edge in the set of distinct edges to one or more distinct vertices that define that edge. Storing the set of distinct primitives, as defined in step S512, may comprise storing a mapping of each distinct primitive in the set of distinct primitives to one or more distinct edges that define that primitive.

The method of figure 5 may further comprise, at step S514, projecting each distinct vertex of the set of distinct vertices into ray space. As explained in detail above, the vertices may be observed in either 3D ray space or 2D ray space. Where the vertices are observed in 2D ray space, each distinct vertex that is defined within the set of distinct vertices (i.e., the coordinates of each vertex in world or instance space) may be mapped onto a plane via a projection parallel to the direction of the ray against which the vertices are to be tested. In other words, each distinct vertex may be projected, at step S514, onto a pair of axes that are orthogonal to the ray direction. It may comprise transforming each distinct vertex into a ray coordinate system, where the ray-coordinate system has an origin at the ray origin, and where the ray-coordinate system has three basis vectors. A first of the basis vectors is aligned with the ray direction; and wherein a second and a third of the basis vectors are respectively aligned with said pair of axes orthogonal to the ray direction, wherein the second and third basis vectors: (i) are not parallel with each other, and (ii) have a zero as one component when expressed in the space-coordinate system. This reduces ray intersection testing from a 3D test to a 2D test. The edge test to determine which side of a distinct edge the ray passes on, as illustrated in step S518 of figure 5, may be performed using the results of distinct vertex projection performed in step S514. In other words, the 2D vertex projection results calculated in step S514 can be used for the subsequent edge testing of step S518. An advantage of using 2D vertex "ray space" coordinates is that edge testing can be significantly simplified and thus its efficiency can be optimised.

As with edge and primitive testing described above, vertex projection is performed for each distinct vertex in a set of distinct vertices individually, irrespective of whether or not each vertex defines two or more of the primitives in the set of primitives. This means that duplicate processing of vertices that are shared by one or more primitives is avoided within the set of primitives, resulting in further efficiencies.

The projection of each distinct vertex into 2D ray space requires information regarding the common ray that is to be tested against the primitives in the set of primitives. Ray data is data that can be used to define a ray, such as the coordinates of the origin of the ray and the coordinates of the direction vector of the ray. In some examples, the ray data may comprise the 3D coordinates of each of the ray origin and the ray direction vector. In other examples, the ray data may comprise 2D coordinates of the ray origin and direction vector, or a combination of 3D and 2D coordinates for these two parameters. Ray data may be fetched for the intersection testing unit from a memory that is accessible by the intersection testing unit.

After a distinct vertex of the set of distinct vertices has been projected from 3D ray space into 2D ray space, the results of that projection may be stored at step S516. Thus, the method of figure 5 may comprise storing the results from the projection of each distinct vertex of the set of distinct vertices. The storage of projection results allows those results to be easily accessed for utilisation by subsequent edge testing and primitive testing steps S518 and S528. The results of projection may be stored in the memory 400, or in an alternatively accessible memory. The results may be stored in a short-term or temporary memory, such as a buffer, so that the results can be used in the short-term for the intersection testing of multiple primitives. Once the intersection method of figure 5 is complete for a set of primitives, the projection results may then be removed from the memory. Storing the projection results in a temporary memory such as a buffer optimises memory usage during intersection testing.

It is mentioned above that step S518 of figure 5 is the same as step S304 of figure 3. This step comprises performing an edge test for each distinct edge to determine which side of the distinct edge the ray passes on. Once step S518 is completed for a distinct edge, the results of the edge test for that distinct edge may be stored S520. More specifically, the 2D cross product or similar of each distinct edge that is tested at step S518 may be stored at step S520. The sign of the area that forms the 2D cross product (e.g., positive or negative) or similar may be stored at step S520. The storage of projection results allows those results to be easily accessed for utilisation by subsequent primitive testing step S522. As with vertex projection results, the results of edge testing may be stored in the memory 400, or in an alternatively accessible memory. The results may be stored in a short-term or temporary memory, such as a buffer, so that the results can be used in the short-term for the intersection testing of multiple primitives. Once the intersection method of figure 5 is complete for a set of primitives, the projection results may then be removed from the memory. The projection results may be replaced, in the memory, by a subsequent set of projection results. The subsequent set of projection results may be results obtained from the testing of a subsequent set of primitives.

Step S522 of figure 5 may correspond to step S306 of figure 3. This step comprises using at least one result of the edge test for each distinct edge that defines the primitive to determine whether or not the ray intersects the primitive and to determine the orientation of the primitive with respect to the ray. That is step S522 comprises, for each primitive in the set of primitives, determining whether the ray intersects a primitive by observing the orientation of each ray with respect to at least one of the edges that defines that primitive. Step S522 may comprise observing the orientation of the ray with respect to all of the edges that define that primitive. This orientation may be further used to modify the intersection determination, e.g., by comparison to a back-face orientation when back-face culling is set. Step S522 may correspond to step S306 of figure 3. That is, step S522 comprises comparing the edge test results for the three edges that define a primitive in order to determine whether there is a hit or a miss between the ray and each of the primitives in the (distinct) set of primitives.

At step S524, as a result of each primitive edge test it is determined, for each primitive in the set of primitives, whether or not the ray has intersected with the primitive. If it is determined that the ray has not intersected a primitive, then no further action is taken by the intersection testing module with respect to that primitive. Thus, the method of figure 5 proceeds to step S526, at which intersection testing for that primitive is deemed to be complete. By ending the method at step S526 if the ray is determined to "miss" a primitive, subsequent calculations for that miss are avoided. The avoidance of these calculations reduces unnecessary power consumption. If, however, it is determined that a ray has intersected a primitive then the method of figure 5 progresses to step S528, which is explained in further detail below. Once one of either S526 or S528 has been performed for each of the primitives in the set of primitives, the method of figure 5 is deemed complete for the processing of that set of primitives against the common ray. The method of figure 5 may then be performed again for either (a) the same set of primitives against a different common ray, (b) a different set of primitives against the same ray, or (c) a different set of primitives against a different common ray.

Step S528 of figure 5 comprises, if a hit (or intersection) between a primitive and the ray is determined, calculating barycentric coordinates and/or an intersection distance for the intersection point at which the ray intersects that primitive. The barycentric coordinates of an intersection indicate the position on the primitive at which the ray intersects the primitive. The barycentric coordinates may otherwise be referred to as "areal coordinates" and may be calculated using interpolation. The barycentric coordinates for a primitive may be found by normalising three weights α', β', and γ', (i.e., by summing the weights and dividing through by the total) so that they sum to 1. In particular, normalising the three weights factors out all uniform scaling. If there is an intersection between a ray and a primitive, then all of the non-zero weights for the primitive will have the same sign for an intersection. So, the magnitudes of the weights (rather than their signed values) can be normalised. Normalising the weight magnitudes reduces processing complexity because it is simpler to add together three values which are known to be nonnegative than to add three values whose signs are unknown. The resulting barycentric coordinates α, β and γ, corresponding to the edges (V₁, V₂), (V₂, V₀) and (V₀, V₁) of a primitive respectively, define a point of intersection of the ray with the primitive V = αV₀ + βV₁ + γV₂. Since the barycentrics, by definition, sum to one, only two of the three values need to be output (although all three weights must be computed to perform the normalisation).

The intersection distance for an intersection indicates the distance along the ray at which the intersection occurs, usually as a multiple of ray lengths. An advantage of expressing the intersection distance as a multiple of ray lengths is that it is unaffected by instance transforms when scaling. In some instances, the intersection determination may be based on whether the distance along the ray that the intersection occurs is (either strictly or non-strictly) between the minimum and maximum clipping distances for the ray (tₘᵢₙ and tₘₐₓ). The results of the intersection testing may be provided to the processing logic 110 of the ray tracing unit 102 illustrated in figure 1. The processing logic 110 may be configured to process the results of the intersection testing to determine processed values (e.g., colour values) representing the image of the 3D scene. The processed values determined by the processing logic 110 can be passed back to the memory 104 for storage therein to represent the image of the 3D scene.

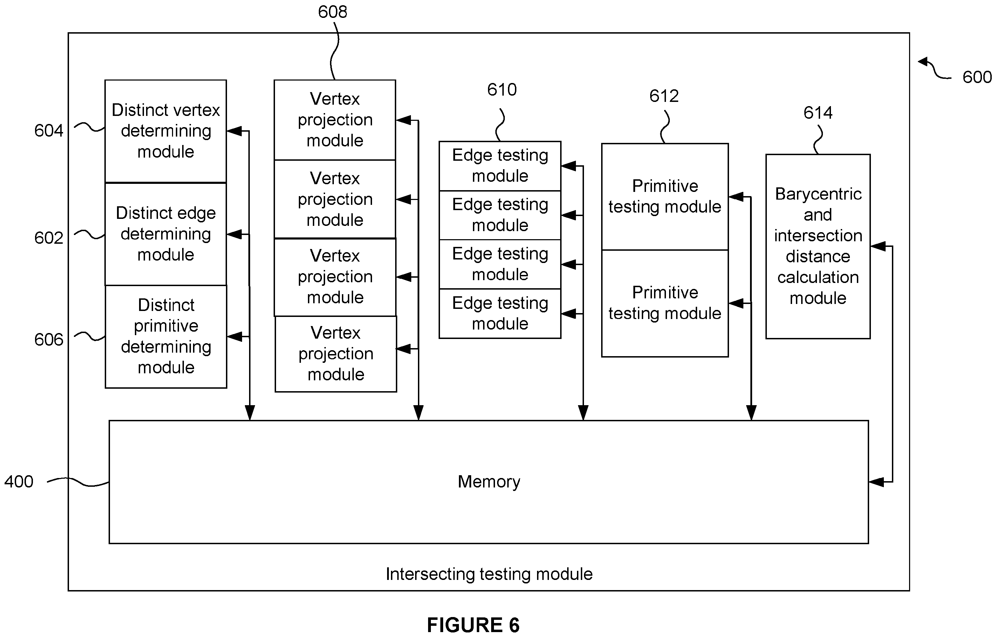

Figure 6 illustrates an intersection testing module 600, for use in a ray tracing system, that is configured to perform intersection testing as described above with respect to figures 3 and 5. The intersection testing module 600 correspond to components of the ray tracing system illustrated in figure 1. Specifically, the processing components of the intersection testing module 600 may correspond to those of the ray tracing unit 102 of figure 1. A portion of the intersection testing module 600 may correspond to a portion of the intersection testing module 108 of figure 1, such as the primitive intersection testing module 114. Whilst the sub-modules of figure 6 are illustrated in specific locations and quantities within the intersection testing module 600, it would be appreciated that these sub-modules may alternatively be illustrated in different locations and/or quantities within the module. The intersection testing module 600 comprises a distinct edge determining module 602, at least one edge testing module 610 and at least one primitive testing module 612. The distinct edge determining module 602 may be comprised within the processing module 106 of the ray tracing unit of figure 1. The at least one edge testing module 610 and at least one primitive testing module 612 may be comprised within the primitive intersection testing unit 114 of the ray tracing unit of figure 1. The intersection testing module 600 may further comprise a memory 400 as illustrated in figure 4. The memory 400 may correspond to the memory 104 of figure 1 and/or a local memory that is read by module 114 of figure 1, as described in further detail below.

The intersection testing module 600 may be configured to determine a set of distinct edges for a set of primitives as defined with respect to figure 2 above. As described above, each distinct edge of the set of distinct edges is part of at least one primitive of the set of primitives. The intersection testing module 600 may comprise a distinct edge determining module 602 that is configured to determine the distinct edges in the set of distinct edges. The module may be configured to define the set of distinct edges during creation of the scene acceleration structure. The distinct edge determining module 602 may form part of a scene hierarchy builder. The edge determining module 602 may form part of processing module 106 of the system illustrated in figure 1. The distinct edge determining module 602 may be connected to the memory 400, for example via a data bus, so that distinct edges that are determined by the distinct edge determining module 602 can be stored in the memory 400 for use by other modules of the intersection testing module.

The intersection testing module 600 may be further configured to determine a set of distinct vertices for the set of primitives as defined with respect to figure 2. The intersection testing module may be configured to determine the set of distinct vertices as described above with respect to figure 5. The intersection testing module 600 may comprise a distinct vertex determining module 604 that is configured to determine the distinct vertices in the set of distinct vertices. The distinct vertex determining module 604 may also be comprised within the processing module 106 of the ray tracing unit of figure 1. The module may be configured to define the set of distinct vertices during creation of the scene acceleration structure. As with the distinct edge determining module 602, the distinct vertex determining module 604 may form part of a scene hierarchy builder. The distinct vertex determining module 604 may also form part of the processing module 106 of the system illustrated in figure 1. The distinct vertex determining module 604 may be connected to the memory 400, for example via a data bus, so that distinct vertices that are determined by the distinct vertex determining module 604 can be stored in the memory 400 for use by other modules of the intersection testing module.

The intersection testing module 600 may be further configured to determine a set of distinct primitives for the set of primitives. The intersection testing module may be configured to determine the set of distinct primitives as described above with respect to figure 5. The intersection testing module 600 may comprise a distinct primitive determining module 606 that is configured to determine the distinct primitives in the set of distinct primitives. The distinct primitive determining module 606 may also be comprised within the processing module 106 of the ray tracing unit of figure 1. The module may be configured to define the set of distinct primitives during creation of the scene acceleration structure. As with the distinct edge determining module 602 and the distinct primitive determining module 604, the distinct primitive determining module 606 may form part of a scene hierarchy builder. The distinct primitive determining module 606 may also form part of the processing module 106 of the system illustrated in figure 1. The distinct primitive determining module 606 may be connected to the memory 400, for example via a data bus, so that distinct primitives that are determined by the distinct primitive determining module 606 can be stored in the memory 400 for use by other modules of the intersection testing module.

The intersection testing module is further configured to, for each distinct edge in the set of distinct edges, perform an edge test to determine which side of the distinct edge the ray passes on. That is, the intersection testing module may be configured to perform method step S304 as described above with reference to figure 3. The intersection testing module may comprise one or more edge testing modules 610. Each edge testing module 610 of the one or more edge testing modules may be configured to perform edge testing for one distinct edge of the set of primitives at a time. In other words, each edge testing module may be able to test a respective edge of the set of distinct edges at a time against a common ray. Each edge testing module may be connected to the memory 400, for example via a bus, so that it can access data from the memory in order to perform edge testing. Edge testing results may be stored in the memory 400, or alternatively in a local memory that is accessible to the edge testing modules. The memory in which edge testing results are to be stored may be a memory local to the intersection testing module 108, separate to the memory 400. More specifically, the memory in which edge testing results are to be stored may be local to the testing unit 114 of figure 1. In one example, an instance of the geometry block may be copied from the memory 400 to the smaller memory local to the intersection testing module 108 as required (i.e., when testing a common ray against that geometry block). Each edge testing may optionally be connected to one or more additional memory resources to obtain ray data and/or store edge testing results. The one or more additional memory resources may be comprised within memory 104 of figure 1. Alternatively, the one or more resources may be an additional resource if memory 104 is reserved for the storage of other data (e.g., the data required to build an acceleration structure and/or frame buffer colour values). Preferably, the intersection testing module comprises a plurality of edge testing modules. In the example illustrated in figure 6, the intersection testing module may comprise four edge testing modules. By comprising a plurality of edge testing modules, the intersection testing module 600 may be able to perform edge testing for a plurality of distinct edges simultaneously. In other words, the intersection testing module may be configured to perform edge testing for a plurality of edges in parallel. Where the intersection testing module comprises four edge testing modules, the module may be able to perform edge testing for up to four distinct edges simultaneously.

The intersection testing module is also configured to, for each primitive in the set of primitives, use a result of the edge test for each distinct edge that defines that primitive to determine whether or not the ray intersects that primitive. That is, the intersection testing module may be configured to perform method step S306 as described above with reference to figure 3. The intersection testing module may comprise one or more primitive testing modules 612. Each primitive testing module 612 may be configured to perform primitive testing for one distinct primitive of the set of primitives at a time. In other words, each primitive testing module may be able to test a respective primitive of the set of distinct primitives at a time against a common ray. Each primitive testing module may be connected to the memory 400, for example via a bus, so that it can access data from the memory in order to perform primitive testing. Primitive testing results may be stored in the memory 400, or alternatively in a local memory that is accessible to the primitive testing modules. Each primitive testing module may optionally be connected to one or more additional memory resources to obtain ray data and/or store primitive testing results. Preferably, the intersection testing module comprises a plurality of primitive testing modules. In the example illustrated in figure 6, the intersection testing module comprises two primitive testing modules. By comprising a plurality of primitive testing modules, the intersection testing module 600 may be able to perform primitive testing for a plurality of distinct primitives simultaneously. In other words, primitive testing may be performed for a plurality of primitives in parallel. Where the intersection testing module comprises two units, the module may be able to perform primitive testing for up to two distinct primitives simultaneously. The intersection testing module may require fewer primitive testing modules than the number of edge testing (or vertex projection) modules due to the ratio of edges/vertices to primitives within a set of primitives. For example, a single triangular primitive has three edges and three vertices, thus there will always be a greater number of edges/vertices in a set of disconnected primitives than there are primitives. For another example, a set of two possibly connected triangular primitives will require at least four edges (and four vertices) as input (ignoring the pathological case). These two examples demonstrate that the number of edge testing modules (and the number of vertex projection modules) should be set as greater than the number of primitive testing modules in order to maximise the overall efficiency of the intersection testing module.

The intersection testing module 600 may further comprise one or more vertex projection modules 608. Each vertex projection module 608 may be configured to perform vertex projection for one distinct vertex of the set of primitives at a time, as illustrated in step S514 of figure 5. The one or more vertex projection modules 608 may be comprised within the primitive intersection testing unit 114 of the ray tracing unit of figure 1. Each vertex projection module may be connected to the memory 400, for example via a bus, so that it can access data from the memory in order to perform vertex projection. Vertex projection results may be stored in the memory 400, or alternatively in a local memory that is accessible to the vertex projection module. Each vertex projection module may optionally be connected to one or more additional memory resources to obtain ray data and/or store vertex projection results. Preferably, the intersection testing module 600 comprises a plurality of vertex projection modules. For example, the intersection testing module may comprise four vertex projection modules. By comprising a plurality of vertex projection modules, the intersection testing module 600 may be able to perform vertex projection for a plurality of distinct vertices simultaneously. In the example illustrated in figure 6, the intersection testing module comprises four vertex projection modules. In this example, the intersection testing module may be able to perform vertex projection for up to four distinct vertices simultaneously. In other words, vertex projection may be performed for a plurality of vertices In parallel.

The intersection testing module 600 may also be configured to perform barycentric and intersection distance calculations for ray-primitive intersections. More specifically, the intersection testing module 600 may comprise a barycentric and intersection distance calculation module 614 configured to calculate barycentric coordinates as illustrated in step S528 of figure 5. The intersection distance calculation unit 614 may be comprised within the primitive intersection testing unit 114 of the ray tracing unit of figure 1. The intersection testing module 600 may comprise a plurality of barycentric and intersection distance calculation modules for performing multiple barycentric/intersection distance calculations in combination. Each barycentric and intersection distance calculation module614 may be connected to the memory 400, for example via a bus, so that it can access data from the memory in order to perform the relevant calculations and optionally store calculation results in the memory. The calculation results may be stored in a memory external to the intersection testing module, such as memory 104 of figure 1. Each barycentric and intersection distance calculation module may optionally be connected to one or more additional memory resources to obtain primitive testing results from that memory.

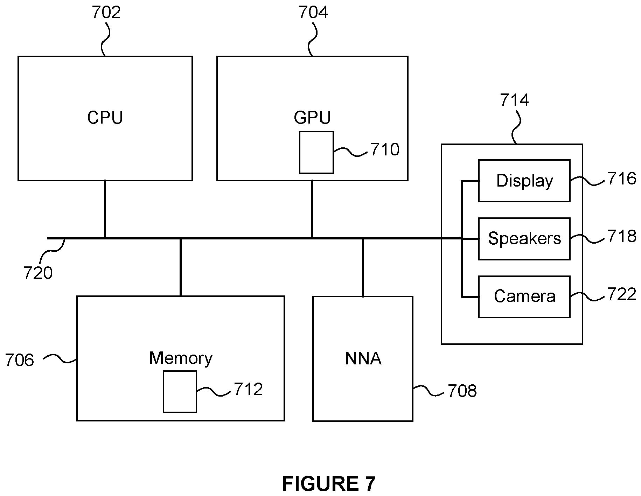

Figure 7 shows a computer system in which the graphics processing systems described herein may be implemented. The computer system comprises a CPU 702, a GPU 704, a memory 706, a neural network accelerator (NNA) 708 and other devices 714, such as a display 716, speakers 718 and a camera 722. A processing block 710 is implemented on the GPU 704. In other examples, one or more of the depicted components may be omitted from the system, and/or the processing block 710 may be implemented on the CPU 702 or within the NNA 708. The components of the computer system can communicate with each other via a communications bus 720. A store 712 is implemented as part of the memory 706.

The modules of figures 1, 4 and 6 are shown as comprising a number of functional blocks. This is schematic only and is not intended to define a strict division between different logic elements of such entities. Each functional block may be provided in any suitable manner. It is to be understood that intermediate values described herein as being formed by an intersection testing module need not be physically generated by the intersection testing module at any point and may merely represent logical values which conveniently describe the processing performed by the intersection testing module between its input and output.

The intersection testing module described herein may be embodied in hardware on an integrated circuit. The intersection testing module described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture an intersection testing module configured to perform any of the methods described herein, or to manufacture an intersection testing module comprising any apparatus described herein. An integrated circuit definition dataset may be, for example, an integrated circuit description.

Therefore, there may be provided a method of manufacturing, at an integrated circuit manufacturing system, an intersection testing module as described herein. Furthermore, there may be provided an integrated circuit definition dataset that, when processed in an integrated circuit manufacturing system, causes the method of manufacturing an intersection testing module to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

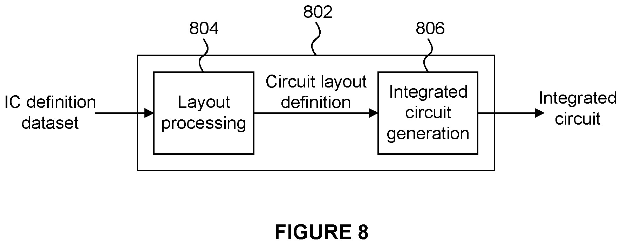

An example of processing an integrated circuit definition dataset at an integrated circuit manufacturing system so as to configure the system to manufacture an intersection testing module will now be described with respect to Figure 8.

Figure 8 shows an example of an integrated circuit (IC) manufacturing system 802 which is configured to manufacture an intersection testing module as described in any of the examples herein. In particular, the IC manufacturing system 802 comprises a layout processing system 804 and an integrated circuit generation system 806. The IC manufacturing system 802 is configured to receive an IC definition dataset (e.g. defining an intersection testing module as described in any of the examples herein), process the IC definition dataset, and generate an IC according to the IC definition dataset (e.g. which embodies an intersection testing module as described in any of the examples herein). The processing of the IC definition dataset configures the IC manufacturing system 802 to manufacture an integrated circuit embodying an intersection testing module as described in any of the examples herein.

The layout processing system 804 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 804 has determined the circuit layout it may output a circuit layout definition to the IC generation system 806. A circuit layout definition may be, for example, a circuit layout description.

The IC generation system 806 generates an IC according to the circuit layout definition, as is known in the art. For example, the IC generation system 806 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 806 may be in the form of computer-readable code which the IC generation system 806 can use to form a suitable mask for use in generating an IC.

The different processes performed by the IC manufacturing system 802 may be implemented all in one location, e.g. by one party. Alternatively, the IC manufacturing system 802 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture an intersection testing module without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 8 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 8, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A method of performing intersection testing, in a ray tracing system, for a ray with respect to a set of two or more primitives, each primitive being defined by an ordered set of edges, each edge being defined by a respective pair of vertices, the method comprising:
determining a set of distinct edges for the set of primitives, each distinct edge being part of at least one primitive of the set of primitives and being defined by a different pair of vertices to the other distinct edges in the set, wherein every edge in the ordered sets of edges that define the set of primitives is represented by a distinct edge of the set of distinct edges;
for each distinct edge in the set of distinct edges, performing an edge test to determine which side of the distinct edge the ray passes on; and
for each primitive in the set of primitives, using a result of the edge test for each distinct edge that defines that primitive to determine whether or not the ray intersects that primitive.

2. The method of claim 1, wherein the ray is determined to intersect a primitive if the results of the edge tests for each distinct edge that defines the primitive indicate that the ray passes on the inside of each of the edges of the primitive.

3. The method of any preceding claim, wherein determining the set of distinct edges comprises performing pairwise comparisons between respective pairs of vertices that define the edges of the primitives in the set of primitives to identify instances of edges that are defined by a common pair of vertices, and defining a single instance of an edge defined by the common pair of vertices as a distinct edge.

4. The method of any preceding claim further comprising storing an edge index for each distinct edge in the set of distinct edges, wherein each edge index represents a corresponding distinct edge in the set of distinct edges.

5. The method of any preceding claim further comprising storing a mapping to each distinct edge in the set of distinct edges from one or more primitives in the set of primitives that are defined by that distinct edge,
optionally wherein storing a mapping to a distinct edge against one or more primitives comprises storing an identifier for each primitive in the set of primitives, the identifier for each primitive being formed of a plurality of respective edge indices, wherein each edge index of the primitive identifier represents a corresponding edge that defines the primitive.

6. The method of any preceding claim, further comprising:
determining a set of distinct primitives for the set of primitives, each distinct primitive being defined by a different set of vertices from the other distinct primitives in the set of distinct primitives; and
storing a mapping to each distinct edge in the set of distinct edges from one or more of the distinct primitives in the set of distinct primitives that are defined by that distinct edge;
wherein the determination of whether or not the ray has intersected a primitive is performed only for the distinct primitives in the set of distinct primitives,
optionally wherein determining the set of distinct primitives comprises performing pairwise comparisons between respective sets of vertices, each set of vertices defining a primitive in the set of primitives to identify instances of primitives that are defined by a common set of vertices, and defining a single instance of a primitive defined by the common set of vertices as a distinct primitive.

7. The method of any preceding claim wherein at least one distinct edge of the set of distinct edges represents an edge that is shared by two or more primitives in the set of primitives.

8. The method of any preceding claim, further comprising:
determining a set of distinct vertices for the set of primitives, each distinct vertex being part of at least one primitive of the set of primitives and being defined by a different set of 3D coordinates from the other distinct vertices in the set of distinct vertices; and
storing a mapping to each distinct vertex in the set of distinct vertices from one or more edges in the set of distinct edges that are defined by that distinct vertex,
optionally wherein storing a mapping to a distinct vertex against one or more edges comprises storing an identifier for each distinct edge, the identifier for each distinct edge being formed of two respective vertex indices, wherein each vertex index of the distinct edge identifier represents a corresponding vertex of the pair of vertices that defines the edge.

9. The method of claim 8, further comprising storing vertex data for each distinct vertex in the set of distinct vertices, the vertex data comprising a set of coordinate indices, each coordinate index indicating a 3D coordinate of the vertex.

10. The method of claim 8 or claim 9, further comprising projecting each distinct vertex of the set of distinct vertices from a 3D space into 2D ray space, optionally further comprising storing the results from the projection of each distinct vertex of the set of distinct vertices.

11. An intersection testing module, for use in a ray tracing system, configured to perform intersection testing for a ray with respect to a set of two or more primitives, each primitive being defined by an ordered set of edges, each edge being defined by a respective pair of vertices, the intersection testing module being configured to:
determine a set of distinct edges for the set of primitives, each distinct edge being part of at least one primitive of the set of primitives and being defined by a different pair of vertices to the other distinct edges in the set, wherein every edge in the ordered sets of edges that define the set of primitives is represented by a distinct edge of the set of distinct edges;
for each distinct edge in the set of distinct edges, perform an edge test to determine which side of the distinct edge the ray passes on; and
for each primitive in the set of primitives, use a result of the edge test for each distinct edge that defines that primitive to determine whether or not the ray intersects that primitive.

12. The intersection testing module of claim 11, further comprising a memory configured to store a mapping to each distinct edge from one or more primitives, and wherein the mapping comprises an identifier for each primitive in the set of primitives, the identifier for each primitive being formed of a plurality of respective indices, wherein each index of the primitive identifier represents a corresponding edge that is part of the primitive.

13. The intersection testing module of claim 12, wherein the memory is configured to store vertex data for each unique vertex in a set of distinct vertices, each distinct vertex being part of at least one primitive of the set of primitives and being defined by a different set of 3D coordinates from the other distinct vertices in the set of distinct vertices; and
wherein the vertex data comprises a set of coordinate indices, each coordinate index indicating a 3D coordinate of the vertex,
optionally wherein the memory is configured to store a mapping to each distinct vertex in the set of distinct vertices against one or more edges in the set of distinct edges that are defined by that distinct vertex, the mapping comprising an identifier for each distinct edge, the identifier for each distinct edge being formed of two respective vertex indices, wherein each vertex index of the distinct edge identifier represents a corresponding vertex of the pair of vertices that defines the edge.

14. Computer readable code configured to cause the method of any of claims 1 to 10 to be performed when the code is run.

15. A computer readable storage medium having stored thereon an integrated circuit definition dataset that, when processed in an integrated circuit manufacturing system, configures the integrated circuit manufacturing system to manufacture an intersection testing module as claimed in any of claims 11 to 13.
